# EUROPÄISCHE PATENTSCHRIFT

(11) **EP 0 602 368 B1**
(45) Veröffentlichungstag und Bekanntmachung des Hinweises auf die Patenterteilung: **08.10.1997**
(21) Anmeldenummer: 93117792.7
(22) Anmeldetag: 03.11.1993
(51) Int. Cl.: H05B 41/36, H05B 41/29

(54) **Vorschaltgerät zum Starten und Betreiben von Hochdruck-Gasentladungslampen**
Ballast for ignition and operation of high pressure gas discharge lamps
Circuit d'allumage et d'alimentation pour lampes à décharge haute pression

(30) Priorität: 15.12.1992 DE 4242174
(43) Veröffentlichungstag der Anmeldung: 22.06.1994
(73) Patentinhaber: Hella KG Hueck & Co., 59552 Lippstadt (DE)
(72) Erfinder: Daub, Wolfgang, D-59558 Lippstadt (DE); Radtke, Volker, D-33330 Gütersloh (DE)

(56) Entgegenhaltungen:
- EP-A- 0 415 496
- DE-A- 4 015 398
- DE-A- 4 017 415

## Beschreibung

Die Erfindung betrifft ein Vorschaltgerät zum Starten und Betreiben von Hochdruck-Gasentladungslampen, das aus einer Batterie gespeist wird, mit mindestens einem strom- und/oder leistungsgeregelten Spannungswandler, der über eine Zündeinrichtung mit einer Hochdruck-Gasentladungslampe verbunden ist und der über einen Eingang mit einer Strom-/Leistungssteuerung verbunden ist, mit einem Ausgang an der Strom-/Leistungssteuerung über den dem Spannungswandler ein Strom-/Leistungssollwert zugeführt wird, mit einem Komparator, der in Abhängigkeit von dem Eingangssignal ein Schaltsignal erzeugt und mit einem Kondensator, der in Abhängigkeit von dem erzeugten Schaltsignal mit einer ersten Zeitkonstanten geladen wird und mit einer zweiten Zeitkonstanten entladen wird und dessen Spannung die Höhe und die Dauer einer der Hochdruck-Gasentladungslampe zugeführten Zusatzleistung nach dem Zünden bestimmt, die von dem Betriebszustand der Hochdruck-Gasentladungslampe abhängig und von deren maximal zulässigen Lampenstrom begrenzt ist.

Aus der deutschen Offenlegungsschrift DE-A-4 015 398 ist ein Vorschaltgerät zum Starten und Betreiben von Hochdruck-Gasentladungslampen bekannt, bei dem das Vorschaltgerät aus der Batterie eines Kraftfahrzeugs gespeist wird. Das bekannte Vorschaltgerät weist einen strom- und leitungsgeregelten Spannungswandler auf, der als ein Wechselrichter ausgebildet ist und aus der von der Fahrzeugbatterie anliegenden Gleichspannung eine Wechselspannung erzeugt. Der Spannungswandler ist über eine Zündeinrichtung mit einer Hochdruck-Gasentladungslampe verbunden. Zur Regelung des der Hochdruck-Gasentladungslampe zugeführten maximal zulässigen Stroms und der Leistung ist der Spannungswandler mit einer Strom-/Leistungssteuerung verbunden. Zudem weist die Strom-/Leistungssteuerung einen Ausgang auf, über den dem Spannungswandler ein Strom-/Leistungssollwert zugeführt wird. Damit nach dem Zünden der Hochdruck-Gasentladungslampe diese zuverlässig und möglichst schnell in einen sicheren Brennzustand gelangt, weist die Strom-/Leistungssteuerung eine Schaltungsanordnung auf, durch die der Hochdruck-Gasentladungslampe direkt nach dem Zünden eine Zusatzleistung von dem Spannungswandler zugeführt wird, die von dem jeweiligen Betriebszustand der Hochdruck-Gasentladungslampe abhängt und von deren maximal zulässigen Lampenstrom begrenzt ist. Hierzu weist die bekannte Schaltungsanordnung einen Komparator auf, der in Abhängigkeit von dem Ladezustand eines ersten Kondensators ein Schaltsignal erzeugt und weist die bekannte Schaltungsanordnung einen zweiten Kondensator auf, der in Abhängigkeit von dem erzeugten Schaltsignal mit einer ersten Zeitkonstanten aufgeladen wird oder mit einer zweiten Zeitkonstanten entladen wird, wobei die Spannung des Kondensators die Höhe und die Dauer der der Hochdruck-Gasentladungslampe zugeführten Zusatzleistung bestimmt. Der erste Kondensator wird mit einer dritten Zeitkonstanten aufgeladen und auch wieder entladen, welche die Zeit bestimmt, für die der zweite Kondensator nicht aufgeladen wird.

Bei dem bekannten Vorschaltgerät zum Starten und Betreiben von Hochdruck-Gasentladungslampen erweist sich als nachteilig, daß zur Bemessung der Zusatzleistung zwei Kondensatoren erforderlich sind, wobei die durch den ersten Kondensator in Verbindung mit dem zugeschalteten Widerstand bestimmte Zeitkonstante, die für das Umschalten des Komparators verantwortlich ist, lampenunabhängig ist. Hierdurch wird der Hochdruck-Gasentladungslampe je nach den vorliegenden Betriebsbedingungen eine Zusatzleistung zugeführt, die nicht der erforderlichen Zusatzleistung entspricht, wodurch ein zuverlässiger und schneller übergang der Hochdruck-Gasentladungslampe in einen stabilen stationären Betriebszustand häufig nicht erreicht wird.

Bei der bekannten Ausführungsform erweist sich als besonders nachteilig, daß der zweite Kondensator, der die Höhe und die Dauer der der Hochdruck-Gasentladungslampe zuzuführenden Zusatzleistungen direkt nach dem Zünden bestimmt, bei ausgeschaltetem Vorschaltgerät neben der beabsichtigten Entladung gemäß der vorgegebenen Zeitkonstanten auch durch über die mit ihm verbundenen Bauteile der Strom-/Leistungssteuerung auftretende Leckströme entladen wird, wodurch bei Inbetriebnahme des Vorschaltgerätes der Hochdruck-Gasentladungslampe eine Zusatzleistung zugeführt wird, die nicht der erforderlichen Zusatzleistung entspricht und auch die erforderliche Lampennennleistung der Hochdruck-Gasentladungslampe im stationären Betrieb nicht eingehalten werden kann, da der zweite Kondensator aufgrund seiner eigenen Leckströme den gewünschten Ladezustand nicht erreicht.

Der Erfindung liegt die Aufgabe zugrunde ein einfaches und kostengünstiges Vorschaltgerät zu schaffen, bei dem sowohl in der Anlaufphase als auch im stationären Betrieb der Hochdruck-Gasentladungslampe eine möglichst exakte, lampenabhängige Regelung des der Lampe zugeführten Stroms beziehungsweise der der Lampe zugeführten Leistung gewährleistet wird.

Die Aufgabe wird erfindungsgemäß dadurch gelöst, daß an dem Eingang ein der Lampenspannung entsprechendes Eingangssignal anliegt, daß die die Zeitkonstanten bestimmenden Zeitglieder über leckstromarme Gleichrichter mit den weiteren Bauteilen der Strom-/Leistungssteuerung verbunden sind, so daß keine Rückentladung des Kondensators über diese Bauteile möglich ist und daß eine hochohmige Leckstromkompensationsschaltung den Leckstrom des Kondensators kompensiert und seine Spannung im stationären Betrieb stabilisiert, welche für eine stabile Nennbetriebsleistung der Lampe erforderlich ist.

Es ist von Vorteil, daß an dem Eingang ein der Lampenspannung entsprechendes Eingangssignal anliegt, weil somit auf besonders einfache und kostengünstige Weise durch alleinige Messung der Lampenspannung bestimmt wird ab wann die Zusatzleistung nach dem Starten zurückgenommen wird und eine Bestimmung des Betriebsstatus der Lampe durch Messung des Lampenstroms nicht erforderlich ist. Die vom Subtrahierer gebildete Differenz aus der Referenzspannung und der am Kondensator anliegenden Spannung entspricht somit auf einfache Weise bei geringem Bauteilaufwand exakt dem erforderlichen zeitlichen Verlauf der der Hochdruck-Gasentladungslampe zuzuführenden Leistung.

Es ist vorteilhaft, daß die die Zeitkonstanten bestimmenden Zeitglieder über leckstromarme Gleichrichter mit den weiteren Bauteilen der Strom-/Leistungssteuerung verbunden sind, weil somit auf einfache und kostengünstige Art und Weise vermieden wird, daß bei abgeschaltetem Vorschaltgerät, bei dem der Kondensator in der gesamten Schaltung das höchste Potential aufweist, dieser durch andere Bauteile der Strom-/Lampensteuerung entladen wird, was beim Einschalten des Vorschaltgerätes zu einer Verfälschung der Höhe und der Dauer der der Hochdruck-Gasentladungslampe zugeführten Zusatzleistung führen würde. Durch die Beschaltung der die Zeitkonstanten bestimmenden Zeitglieder mit leckstromarmen Gleichrichtern wird somit auf einfache und kostengünstige Weise sichergestellt, daß die vorgegebenen Zeitkonstanten für das Entladen des Kondensators durch die Vermeidung von Entladeströmen über andere Bauelemente bestmöglich eingehalten werden und somit der stationäre Betriebszustand der Hochdruck-Gasentladungslampe schnell, sicher und ohne Schädigung der Lampe z. B. durch die Beaufschlagung eines zu hohen Stroms erreicht wird.

Es erweist sich als besonders vorteilhaft, daß eine hochohmige Leckstromkompensationsschaltung den Leckstrom des Kondensators kompensiert und die Spannung von dem Kondensator bei maximal geladenem Kondensator auf die für eine stabile Nennbetriebsleistung der Lampe erforderliche Spannung stabilisiert, weil somit auf einfache und kostengünstige Weise die Nennbetriebsleistung der Hochdruck-Gasentladungslampe im stationären Betriebsfall bestmöglich eingehalten wird.

Dadurch, daß die Leckstromkompensationsschaltung als ein Operationsverstärker ausgebildet ist, dessen nichtinvertierender Eingang mit einer Referenzspannungsquelle verbunden ist, dessen invertierender Eingang mit einer Klemme verbunden ist und dessen Ausgang über einen hochohmigen vierten Widerstand mit der Klemme verbunden ist und diese Klemme einerseits über den Gleichrichter mit dem Kondensator und andererseits über eine differenzbildende Schaltung mit dem Ausgang der Strom-/Leistungssteuerung verbunden ist, ergibt sich der Vorteil einer besonders einfachen und zuverlässigen Schaltungsanordnung zur Regelung der Nennbetriebsleistung der Hochdruck-Gasentladungslampe auf einen exakten Wert, wobei durch Verwendung eines hochohmigen vierten Widerstands die Zeitkonstanten für das Laden des Kondensators nicht oder nur geringfügig beeinflußt werden. Der letztgenannte Vorteil wird insbesondere dann erreicht, wenn die Zeitkonstante, die durch den Kondensator und den vierten Widerstand bestimmt ist, um mindestens eine Größenordnung höher liegt als die Zeitkonstanten, die durch die Zeitglieder für die Ladung und Entladung des Kondensators bestimmt sind.

Durch die Verwendung einer Strom-/Leistungssteuerung gemäß den Merkmalen des Anspruchs 4, wird eine besonders einfach aufgebaute und kostengünstige Ausführungsform ermöglicht, die sowohl in der Anlaufphase als auch im stationären Betrieb der Hochdruck-Gasentladungslampe eine möglichst exakte lampenabhängige Regelung des der Lampe zugeführten Stroms bzw. der der Lampe zugeführten Leistung gewährleistet, wobei durch die Verwendung eines niederohmigen ersten Widerstands zur Aufladung des Kondensators über den dritten Widerstand keine negative Beeinflussung des Ladevorganges des Kondensators erfolgt. Dies wird insbesondere dadurch erreicht, daß gemäß Anspruch 5 der Widerstandswert des ersten Widerstands um mindestens eine Größenordnung kleiner ist als die Widerstandswerte des zweiten und des dritten Widerstands.

Dadurch, daß die leckstromarmen Gleichrichter die Basis-Kollektor-Dioden bipolarer Transistoren sind, ergibt sich eine besonders preisgünstige Ausführung der Schaltung, da leckstromarme Dioden, die die gleiche Wirkung haben wie die hier vorgeschlagenen Transistoren wesentlich teurer sind.

Es ist von Vorteil, daß der Kondensator ein leckstromarmer Tantal-Kondensator ist, weil somit sichergestellt wird, daß auch bei hohen Temperaturen in dem Vorschaltgerät zum Beispiel bei einer lampennahen Anordnung die gewünschte Lade- und Entladecharakteristik nicht durch zu große Leckströme beeinflußt werden.

Es ist von Vorteil, das Vorschaltgerät zum Starten und Betreiben von Hochdruck-Gasentladungslampen in Kraftfahrzeugen zu verwenden, da die für Kraftfahrzeuge aufgestellten Forderungen an den Betrieb von Hochdruck-Gasentladungslampen bezüglich der Zuverlässigkeit bei der Inbetriebnahme, den Zeiten für das Erreichen bestimmter Lichtleistungen und die Einhaltung einer konstanten Lichtleistung durch das Vorschaltgerät bestmöglich erfüllt werden.

Ein Ausführungsbeispiel des Erfindungsgegenstandes ist in den Zeichnungen dargestellt und wird im folgenden anhand der Figuren näher beschrieben.

Gleiche oder gleichwirkende Merkmale in den Figuren sind mit gleichen Bezugszeichen versehen.

Es zeigen
- Figur 1: ein Blockschaltbild eines erfindungsgemäßen Vorschaltgeräts zum Starten und Betreiben von Hochdruck-Gasentladungslampen;
- Figur 2: eine Schaltungsanordnung einer Strom-/Leistungssteuerung eines erfindungsgemäßen Vorschaltgeräts.

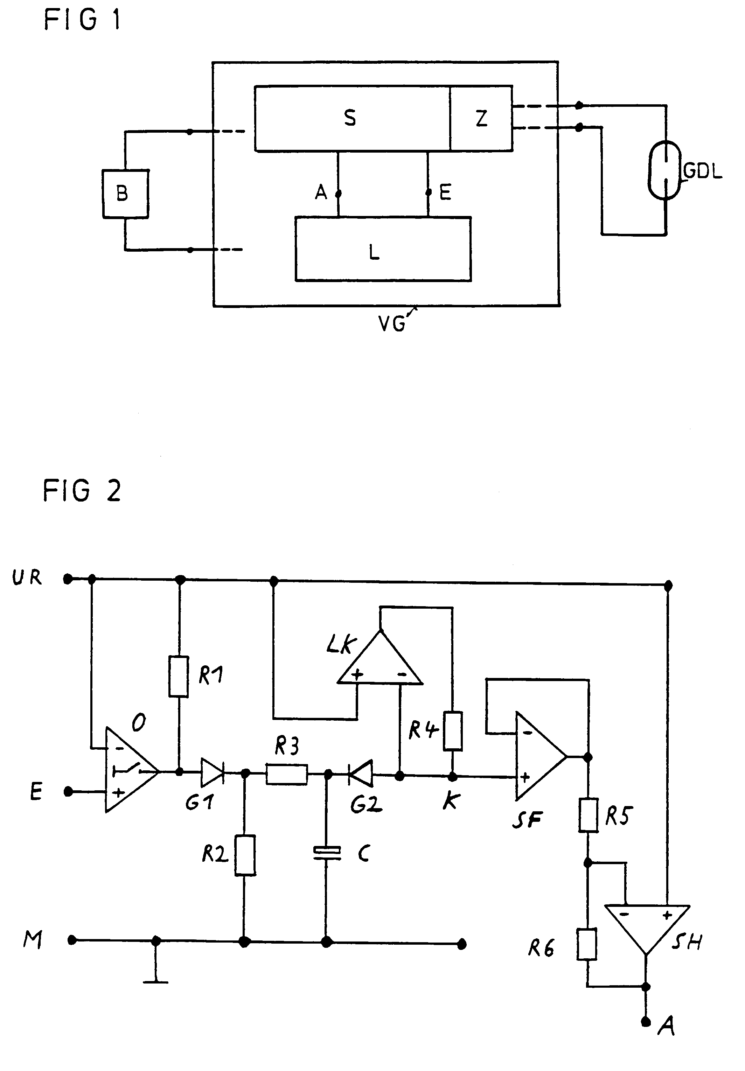

Figur 1 zeigt ein Blockschaltbild eines erfindungsgemäßen Vorschaltgeräts (VG) zum Starten und Betreiben von Hochdruck-Gasentladungslampen (GDL). Das Vorschaltgerät (VG) wird von einer Batterie (B) gespeist, die z. B. die Fahrzeugbatterie eines Kraftfahrzeugs sein kann. Das Vorschaltgerät weist mindestens einen strom- und leistungsgesteuerten Spannungwandler (S) auf, der über eine Zündeinrichtung (Z) mit einer Hochdruck-Gasentladungslampe (GDL) verbunden ist. Bei dem hier gezeigten Ausführungsbeispiel ist Zündeinrichtung (Z) Teil des Vorschaltgeräts (VG). Bei einem anderen Ausführungsbeispiel kann die Zündeinrichtung (Z) auch gesondert angeordnet sein.

Der mindestens eine strom- und leistungsgeregelte Spannungswandler (S) ist bei dem hier gezeigten Ausführungsbeispiel ein DC/DC-Wandler, dem zum Ansteuern einer Wechselstrom-Hochdruck-Gasentladungslampe (GDL) ein hier nicht gezeigter Brückenschalter nachgeordnet ist. Bei einem anderen Ausführungsbeispiel, bei dem eine Gleichstrom-Hochdruck-Gasentladungslampe (GDL) betrieben werden soll, ist ein Nachschalten eines Brückenschalters bzw. Wechselrichters nicht erforderlich.

Unabhängig von der jeweiligen Ausführungsform des mindestens einen strom- und leistungsgeregelten Spannungswandlers (S), ist dieser mit einer Strom-/Leistungssteuerung (L) verbunden. Die Strom-/Leistungssteuerung (L) weist dabei einen Eingang (E) auf, an dem ein der Lampenspannung entsprechendes Eingangssignal anliegt. Die Strom-/Leistungssteuerung (L) weist einen Ausgang (A) auf, über den dem Spannungswandler (S) ein Strom-/Leistungssollwert zugeführt wird. Insbesondere direkt nach dem Zünden der Hochdruck-Gasentladungslampe (GDL) muß dieser eine erhöhte Leistung, d. h. eine Zusatzleistung zugeführt werden, damit die Hochdruck-Gasentladungslampe (GDL) möglichst schnell einen stabilen stationären Brennzustand ohne Flackererscheinungen annimmt.

Zu diesem Zweck weist die Strom-/Leistungssteuerung (L) eine in Figur 2 gezeigte Schaltungsanordnung zum Erzeugen einer Zusatzleistung direkt nach dem Zünden der Hochdruck-Gasentladungslampe (GDL) auf, die in Abhängigkeit von dem Lampenbetriebszustand steht und durch den maximal zulässigen Lampenstrom begrenzt ist.

Der Eingang (E), an dem ein der Lampenspannung entsprechendes Eingangssignal anliegt, ist mit dem nichtinvertierenden Eingang des Komparators (O) verbunden. Der invertierende Eingang des Komparators (O) ist mit der Referenzspannungsquelle (UR) verbunden. Der Komparator (O) weist bei dem hier gezeigten Ausführungsbeispiel einen Ausgang auf, der je nach dem Schaltzustand des Komparators (O) entweder offen oder mit Masse (M) verbunden ist. Dieser Ausgang des Komparators ist zum einen über einen niederohmigen ersten Widerstand (R1) mit der Referenzspannungsquelle (UR) und zum anderen mit der Anode des ersten leckstromarmen Gleichrichters (G1) verbunden. Die Kathode des ersten Gleichrichters (G1) ist zum einen über einen zweiten Widerstand (R2) mit Masse (M) und zum anderen über einen dritten Widerstand (R3) und den Kondensator (C) mit Masse (M) verbunden. Der Kondensator (C) ist zudem mit der Kathode des zweiten leckstromarmen Gleichrichters (G2) verbunden, dessen Anode zum einen mit dem invertierenden Eingang der Leckstromkompensationsschaltung (LK) und zum anderen über die Klemme (K) mit dem nichtinvertierenden Eingang eines Spannungsfolgers (SF) verbunden ist. Der nichtinvertierende Eingang der Leckstromkompensationsschaltung (LK) ist mit der Referenzspannungsquelle (UR) verbunden. Der Ausgang der Leckstromkompensationsschaltung (LK) ist über einen hochohmigen vierten Widerstand (R4) zur Stabilisierung der Spannung an der Klemme (K) mit dieser verbunden. Der Ausgang des Spannungsfolgers (SF) ist in bekannter Weise sowohl mit dessen invertierenden Eingang als auch über einen fünften Widerstand (R5) mit dem invertierenden Eingang eines Subtrahierers (SH) verbunden. Der nichtinvertierende Eingang des Subtrahierers (SH) ist ebenfalls an die Referenzspannungsquelle (UR) angeschlossen. Der Ausgang des Subtrahierers (SH) ist zum einen über einen sechsten Widerstand (R6) mit dem invertierenden Eingang des Subtrahierers (SH) verbunden und zum anderen mit dem Ausgang (A) der Strom-/Leistungssteuerung (L). Der Substrahierer (SH) bildet mit den Widerständen (R5, R6) eine Substrahierschaltung.

Der Kondensator (C) kann zur Reduzierung auftretender Leckströme als ein leckstromarmer Tantal-Kondensator ausgebildet sein.

Die leckstromarmen Gleichrichter (G1, G2), die in Figur 2 als Dioden eingezeichnet sind, können für eine kostengünstige Ausführung der Schaltung durch Transistoren und insbesondere durch bipolare Transistoren ersetzt werden, wobei die Basis-Kollektor-Dioden der bipolaren Transistoren die leckstromarmen Gleichrichter (G1, G2) ersetzen.

Um die durch den Kondensator (C), den zweiten Widerstand (R2) und den dritten Widerstand (R3) vorgegebenen Zeitkonstanten möglichst nicht zu beeinflussen, ist der Widerstandswert des vierten Widerstands (R4) um mindestens eine Größenordnung größer als die Widerstandswerte des zweiten und des dritten Widerstands (R2, R3) und ist der Widerstandswert des ersten Widerstands (R1) um mindestens eine Größenordnung kleiner als die Widerstandswerte des zweiten und des dritten Widerstands (R2, R3).

Durch die Verwendung nur einer Referenzspannungsquelle ergibt sich eine besonders einfache und kostengünstige Schaltungsanordnung.

Im folgenden wird die Wirkungsweise des Erfindungsgegenstandes entsprechend Figur 2 kurz beschrieben.

Bei ausgeschaltetem Vorschaltgerät (VG) wird der Kondensator (C) entsprechend der vorgewählten Zeitkonstante über die Widerstände (R3, R2) entladen, wobei mögliche Leckströme zu anderen Schaltungskomponenten der Strom-/Leistungssteuerung (L) durch die leckstromarmen Gleichrichter (G1, G2) bestmöglich vermieden werden.

Ist die Hochdruck-Gasentladungslampe kalt, so ist der Kondensator (C) vollständig entladen, d. h. die Spannung an dem Kondensator (C) weist einen Minimalwert auf.

Wird ausgehend von diesem Zustand das Vorschaltgerät (VG) in Betrieb genommen, so wird die Hochdruck-Gasentladungslampe (GDL) entsprechend Figur 1 durch die von dem mindestens einen Spannungswandler (S) und der Zündeinrichtung (Z) bereitgestellten Spannung gezündet. Ein der Lampenspannung entsprechendes Eingangssignal liegt an dem Eingang (E) der Schaltungsanordnung gemäß Figur 2 an. Dieses Eingangssignal an dem Eingang (E) wird durch den Komparator (O) mit einer Referenzspannung von der Referenzspannungsquelle (UR) verglichen. Überschreitet die Lampenspannung eine vorgegebene Lampengrenzspannung, erzeugt der Komparator (O) ein Schaltsignal, der interne Massenkontakt wird geöffnet und der Ausgang des Komparators (O) nimmt den offenen Schaltzustand an.

Der Kondensator (C) wird somit über den dritten Widerstand (R3) und den niederohmigen ersten Widerstand (R1) aus der Referenzspannungsquelle (UR) entsprechend der durch den Kondensator (C) und den dritten Widerstand (R3) vorgegebenen Zeitkonstante aufgeladen. Die Spannung am Ausgang (A) der Strom-/Leistungssteuerung wird demgemäß beginnend mit einem Maximalwert, der einer maximalen Leistung entsprechend einem vollständig entladenen Kondensator (C) gemäß der vorgegebenen Zeitkonstante bis auf einen dem Leistungssollwert für den stationären Betriebszustand der Hochdruck-Gasentladungslampe (GDL) entsprechenden Spannungswert reduziert. Damit die Nennleistung der Hochdruck-Gasentladungslampe (GDL) bestmöglich eingehalten wird, wird nach Erreichen des maximalen Spannungswertes des Kondensators (C) die Spannung an der Klemme (K) durch die Leckstromkompensationsschaltung (LK) stabilisiert, die die Spannung an der Klemme (K) in Abhängigkeit von dem Spannungswert des Kondensators (C) auf die Spannung der Referenzspannungsquelle (UR) stabilisiert.

Wird das Vorschaltgerät (VG) abgeschaltet, so weist der Kondensator (C) je nach der Betriebsdauer der Hochdruck-Gasentladungslampe (GDL) eine Spannung auf, die zwischen der minimalen Spannung (Lampe war nicht in Betrieb) und der Maximalspannung (Lampe ist heiß) variiert.

Der Kondensator (C) wird dann gemäß einer Zeitkonstante, die durch den Kondensator (C), den dritten Widerstand (R3) und den zweiten Widerstand (R2) vorgegeben ist, über diese Widerstände entladen. Wird das Vorschaltgerät (VG) wieder eingeschaltet, so entspricht die von der Hochdruck-Gasentladungslampe (GDL) benötigte erhöhte Leistung der Differenz, welche der Substrahierer (SH) aus der Referenzspannung (UR) und der Restspannung an dem Kondensator (C) bildet, so daß der Hochdruck-Gasentladungslampe (GDL) auf einfache und kostengünstige Weise in jedem Betriebszustand der exakt benötigte Strom bzw. die exakt benötigte Leistung zugeführt wird.

Dies wird insbesondere dadurch erreicht, daß der Kondensator (C) gegenüber Leckstromverlusten durch die Gleichrichter (G1, G2) geschützt wird und eventuell noch vorliegende eigene Leckströme bei Erreichen des stationären Betriebszustandes der Hochdruck-Gasentladungslampe (GDL) durch Stabilisierung der Spannung an der Klemme (K) durch die Leckstromkompensationsschaltung (LK) ausgeglichen werden.

Damit die Spannungsstabilisierung durch die Leckstromkompensationsschaltung (LK) den Ladevorgang des Kondensators (C) und somit die Regelung der Zusatzleistung nicht negativ beeinflusst wird, wird der Widerstandswert des vierten Widerstands (R4) einerseits so hoch gewählt, daß dieser mit dem Kondensator (C) eine Zeitkonstante bildet, die um mindestens eine Größenordnung über allen anderen wirksamen Zeitkonstanten der Schaltung der Strom-/Leistungssteuerung (L) liegt und andererseits klein genug, daß der größte mögliche Leckstrom des Kondensators (C) noch kompensiert werden kann.

### Bezugszeichenliste

### Vorschaltgerät zum Starten und Betreiben von Hochdruck-Gasentladungslampen

- A: Ausgang
- B: Batterie
- C: Kondensator
- E: Eingang
- G1: erster Gleichrichter
- G2: zweiter Gleichrichter
- GDL: Hochdruck-Gasentladungslampe
- K: Klemme
- L: Strom-/Leistungssteuerung
- M: Masse
- O: Komparator
- R1: erster Widerstand
- R2: zweiter Widerstand
- R3: dritter Widerstand
- R4: vierter Widerstand
- R5: fünfter Widerstand
- R6: sechster Widerstand
- S: Spannungswandler
- SF: Spannungsfolger
- SH: Subtrahierer
- LK: Leckstromkompensationsschaltung
- UR: Referenzspannungsquelle
- VG: Vorschaltgerät
- Z: Zündeinrichtung

## Patentansprüche

1. Vorschaltgerät zum Starten und Betreiben von Hochdruck-Gasentladungslampen, das aus einer Batterie (B) gespeist wird, mit mindestens einem strom- und/oder leistungsgeregelten Spannungswandler (S), der über eine Zündeinrichtung (Z) mit einer Hochdruck-Gasentladungslampe (GDL) verbunden ist und der über einen Eingang (E) mit einer Strom-/Leistungssteuerung (L) verbunden ist, mit einem Ausgang (A) an der Strom-/Leistungssteuerung (L), über den dem Spannungswandler (S) ein Strom-/Leistungssollwert zugeführt wird, mit einem Komparator (O), der in Abhängigkeit von dem Eingangssignal ein Schaltsignal erzeugt und mit einem Kondensator (C), der in Abhängigkeit von dem erzeugten Schaltsignal mit einer ersten Zeitkonstanten geladen oder mit einer zweiten Zeitkonstanten entladen wird, und dessen Spannung die Höhe und die Dauer einer der Hochdruck-Gasentladungslampe (GDL) zugeführten Zusatzleistung nach dem Zünden bestimmt, die von dem Betriebszustand der Hochdruck-Gasentladungslampe (GDL) abhängt und von deren maximal zulässigen Lampenstrom begrenzt ist, dadurch gekennzeichnet, daß an dem Eingang (E) ein der Lampenspannung entsprechendes Eingangssignal anliegt, daß die die Zeitkonstanten bestimmenden Zeiglieder (C, R3; C, R2, R3) über leckstromarme Gleichrichter (G1, G2) mit den weiteren Bauteilen der Strom-/Leistungssteuerung (L) verbunden sind, so daß keine Rückentladung des Kondensators (C) über diese Bauteile möglich ist und daß eine hochohmige Leckstromkompensationsschaltung (LK) den Leckstrom des Kondensators (C) kompensiert und seine Spannung im stationären Betrieb stabilisiert, welche für eine stabile Nennbetriebsleistung der Lampe (GDL) erforderlich ist.

2. Vorschaltgerät nach Anspruch 1, dadurch gekennzeichnet, daß die Leckstromkompensationsschaltung (LK) als ein Operationsverstärker ausgebildet ist, dessen nichtinvertierender Eingang mit einer Referenzspannungsquelle (UR) verbunden ist, dessen invertierender Eingang mit einer Klemme (K) verbunden ist und dessen Ausgang über einen hochohmigen vierten Widerstand (R4) mit der Klemme (K) verbunden ist und diese Klemme (K) einerseits über den Gleichrichter (G2) mit dem Kondensator (C) und andererseits über eine differenzbildende Schaltung (SF, SH, R5, R6) mit dem Ausgang (A) der Strom-/Leistungssteuerung (L) verbunden ist.

3. Vorschaltgerät nach Anspruch 2, dadurch gekennzeichnet, daß die Zeitkonstante, die durch den Kondensator (C) und den vierten Widerstand (R4) bestimmt ist, um mindestens eine Größenordnung höher liegt als die Zeitkonstanten, die durch die Zeitglieder (C, R3; C, R2, R3) bestimmt sind.

4. Vorschaltgerät nach Anspruch 3, dadurch gekennzeichnet, daß der invertierende Eingang des Komparators (O) mit der Referenzspannungsquelle (UR) verbunden ist, daß der nichtinvertierende Eingang des Komparators (O) mit dem Eingang (E) verbunden ist, daß der Ausgang des Komparators (O), der entweder auf Masse geschaltet oder offen ist, zum einen über einen niederohmigen ersten Widerstand (R1) mit der Referenzspannungsquelle (UR) und zum anderen mit der Anode des ersten leckstromarmen Gleichrichters (G1) verbunden ist, daß die Kathode des ersten Gleichrichters (G1) zum einen über einen zweiten Widerstand (R2) mit Masse (M) und zum anderen über einen dritten Widerstand (R3) und den Kondensator (C) mit Masse (M) verbunden ist, daß der Kondensator (C) mit der Kathode des zweiten leckstromarmen Gleichrichters (G2) verbunden ist und daß die Anode des zweiten Gleichrichters (G2) über die Klemme (K) zum einen mit der Leckstromkompensationsschaltung (LK) und zum anderen über einen Spannungsfolger (SF) mit einem Subtrahierer (SH) verbunden ist, dessen nichtinvertierender Eingang an die Referenzspannungsquelle (UR) angeschlossen ist und dessen Ausgang dem Ausgang (A) entspricht.

5. Vorschaltgerät nach Anspruch 4, dadurch gekennzeichnet, daß der Widerstandswert des ersten Widerstands (R1) um mindestens eine Größenordnung kleiner ist als die Widerstandswerte des zweiten und dritten Widerstands (R2, R3).

6. Vorschaltgerät nach einem der vorstehenden Ansprüche, dadurch gekennzeichnet, daß die leckstromarmen Gleichrichter (G1, G2) die Basis-Kollektor-Dioden bipolarer Transistoren sind.

7. Vorschaltgerät nach einem der vorstehenden Ansprüche, dadurch gekennzeichnet, daß der Kondensator (C) ein leckstromarmer Tantal-Kondensator ist.

8. Vorschaltgerät nach einem der vorstehenden Ansprüche, gekennzeichnet durch die Verwendung zum Starten und Betreiben von Hochdruck-Gasentladungslampen (GDL) in Kraftfahrzeugen.

## Claims

1. Ballast for starting and operating high pressure gas discharge lamps, which is fed by a battery (B), having at least one current and/or power regulated voltage converter (S) which is connected by way of an igniting device (Z) to a high pressure gas discharge lamp (GDL) and which is connected by way of an input (E) to a current/power control (L), and having an output (A) at the current/power control (L) whereby a current/power desired value is supplied to the voltage converter (S), and having a comparator (O) which dependent upon the input signal produces a switch signal, and having a capacitor (C) which dependent upon the produced switch signal is charged with a first time constant or discharged with a second time constant and whose voltage determines the magnitude and duration of additional power supplied to the high pressure gas discharge lamp (GDL) after igniting dependent upon the operating condition of the high pressure gas discharge lamp (GDL) and limited to its maximum permissible lamp current, characterised in that an input signal corresponding to the lamp voltage is applied at the input (E), in that the time function elements (C, R3; C, R2, R3) which determine the time constants are connected to the further components of the current/power control (L) by way of low leakage current rectifiers (G1, G2) so that no back discharge of the capacitor (C) by way of these components is possible, and in that a high resistance leakage current compensating circuit (LK) compensates the leakage current of the capacitor (C) and stabilises its voltage which is required for steady operation of the lamp (GDL) with stable rated operating power.

2. Ballast according to claim 1, characterised in that the leakage current compensating circuit (LK) is constructed as an operational amplifier whose non inverting input is connected to a reference voltage source (UR), whose inverting input is connected to a terminal (K) and whose output is connected by way of a high value fourth resistor (R4) to the terminal (K), and this terminal (K) is connected on the one hand by way of the rectifier (G2) to the capacitor (C) and on the other hand by way of a difference forming circuit (SF, SH, R5, R6) to the output (A) of the current/power control (L).

3. Ballast according to claim 2, characterised in that the time constant which is determined by the capacitor (C) and the fourth resistor (R4) is at least one order of magnitude greater than the time constants determined by the time function elements (C, R3; C, R2, R3).

4. Ballast according to claim 3, characterised in that the inverting input of the comparator (O) is connected to the reference voltage source (UR), in that the non inverting input of the comparator (O) is connected to the input (E), in that the output of the comparator (O) which is either switched to earth or is open, is connected on the one hand by way of a low value first resistor (R1) to the reference voltage source (UR) and on the other hand to the anode of the first low leakage current rectifier (G1), in that the cathode of the first rectifier (G1) is connected on the one hand to earth (M) by way of a second resistor (R2) and on the other hand to earth (M) by way of a third resistor (R3) and the capacitor (C), in that the capacitor (C) is connected to the cathode of the second low leakage current rectifier (G2) and in that the anode of the second rectifier (G2) is connected by way of the terminal (K) on the one hand to the leakage current compensating circuit (LK) and on the other hand by way of a voltage follower (SF) to a subtracter (SH) whose non inverting input is coupled to the reference voltage source (UR) and whose output corresponds to the output (A).

5. Ballast according to claim 4, characterised in that the resistance value of the first resistor (R1) is at least one order of magnitude smaller than the resistance values of the second and third resistors (R2, R3).

6. Ballast according to one of the preceding claims, characterised in that the low leakage current rectifiers (G1, G2) are the base collector diodes of bipolar transistors.

7. Ballast according to one of the preceding claims, characterised in that the capacitor (C) is a low leakage current tantalum capacitor.

8. Ballast according to one of the preceding claims, characterised by use for starting and operating high pressure gas discharge lamps (GDL) in motor vehicles.

## Revendications

1. Ballast pour démarrer et faire fonctionner des lampes à décharge de gaz sous haute pression, qui est alimenté à partir d'une batterie (B), comportant au moins un convertisseur de tension (S) qui est régulé en intensité et/ou en puissance, qui est relié, par l'intermédiaire d'un dispositif d'allumage (Z), à une lampe de décharge de gaz sous haute pression (GDL) et qui, par l'intermédiaire d'une entrée (E), est relié à un circuit de commande de l'intensité/de la puissance (L), avec, sur le circuit de commande de l'intensité/de la puissance (L), une sortie (A) par l'intermédiaire de laquelle une valeur prescrite de l'intensité/de la puissance est amenée au convertisseur de tension (S), ainsi qu'un comparateur, (O) qui produit un signal de commutation en fonction du signal d'entrée et qu'un condensateur (C) qui, en fonction du signal de commutation produit, se charge avec une première constante de temps ou se décharge avec une seconde constante de temps et dont la tension détermine, après l'allumage, la valeur et la durée d'une puissance supplémentaire qui est amenée à la lampe à décharge de gaz sous haute pression (GDL), qui dépend de l'état de fonctionnement de la lampe à décharge de gaz sous haute pression (GDL) et dont l'intensité maximale autorisée est limitée, caractérisé par le fait qu'à l'entrée (E) arrive un signal d'entrée correspondant à la tension de la lampe, que les éléments de temporisation (C, R3; C, R2, R3) qui déterminent les constantes de temps sont reliés, par l'intermédiaire de redresseurs à faible courant de fuite (G1, G2), aux autres composants du circuit de commande de l'intensité/de la puissance (L), de sorte qu'aucune rétro-décharge du condensateur (C) n'est possible par l'intermédiaire de ces composants et par le fait qu'un circuit de compensation du courant de fuite (LK) compense le courant de fuite du condensateur (C) et, en fonctionnement stationnaire, stabilise sa tension qui est nécessaire pour une puissance de fonctionnement nominale stable de la lampe (GDL).

2. Ballast selon la revendication 1, caractérisé par le fait que le circuit de compensation de courant de fuite (LK) est conçu sous forme d'un amplificateur opérationnel dont l'entrée de non-changement de signe est reliée à une source de tension de référence (UR), dont l'entrée de changement de signe est reliée à une borne (K) et dont la sortie est reliée, par l'intermédiaire d'une quatrième résistance à valeur élevée de la résistance (R4) avec la borne (K) et que cette borne (K) est reliée, d'une part, par l'intermédiaire du redresseur (G2), avec le condensateur (C) et, d'autre part, par l'intermédiaire d'un circuit formant la différence (SF, SH, R5, R6), avec la sortie (A) du circuit de commande de l'intensité/de la puissance (L).

3. Ballast selon la revendication 2, caractérisé par le fait que la constante de temps qui est déterminée par le condensateur (C) et par la quatrième résistance (R4) est plus grande, d'au moins une puissance de dix, que les constantes de temps qui sont déterminées par les éléments de temporisation (C, R3; C, R2, R3).

4. Ballast selon la revendication 3, caractérisé par le fait que l'entrée de changement de signe du comparateur (O) est reliée à la source de tension de référence (UR), que l'entrée de non changement du signe du comparateur (O) est reliée à l'entrée (E), que la sortie du comparateur (O), qui soit est mise à la masse soit est en circuit ouvert, est reliée, d'une part, par l'intermédiaire d'une première résistance à faible valeur de la résistance (R1), avec la source de tension de référence (UR) et d'autre part, avec l'anode du premier redresseur à faible courant de fuite (G1), que la cathode du premier redresseur (G1) est reliée, d'une part, par l'intermédiaire d'une seconde résistance (R2), avec la masse (M) et, d'autre part, par l'intermédiaire d'une troisième résistance (R3) et du condensateur (C), avec la masse (M), que le condensateur (C) est relié avec la cathode du second redresseur à faible courant de fuite (G2) et que l'anode du second redresseur (G2) est reliée, par l'intermédiaire de la borne (K), d'une part avec le circuit de compensation de courant de fuite (LK) et d'autre part, par l'intermédiaire d'un amplificateur-suiveur (SF), avec un sous tracteur (SH) dont l'entrée de non changement de signe est reliée à la source de tension de référence (UR) et dont la sortie correspond à la sortie (A).

5. Ballast selon la revendication 4, caractérisé par le fait que la valeur de la première résistance (M) est plus petite, d'au moins une puissance de dix, que les valeurs de la seconde et de la troisième résistances (R2, R3).

6. Ballast selon l'une des revendications précédentes, caractérisé par le fait que ce sont les diodes base-collecteur des transistors bipolaires qui jouent le rôle des redresseurs à faible courant de fuite (G1, G2).

7. Ballast selon l'une des revendications précédentes, caractérisé par le fait que le condensateur (C) est un condensateur au tantale à faible courant de fuite.

8. Ballast selon l'une des revendications précédentes, caractérisé par son emploi pour démarrer et faire fonctionner des lampes à décharge de gaz sous haute pression (GDL) dans des véhicules à moteur.
